# EUROPEAN PATENT SPECIFICATION

(11) **EP 3 205 938 B1**
(45) Date of publication and mention of the grant of the patent: **13.01.2021**
(21) Application number: 17154747.4
(22) Date of filing: 06.02.2017
(51) Int. Cl.: F23R 3/10, F23R 3/34

(54) **GAS TURBINE ASSEMBLY**
GASTURBINENANORDNUNG
ARRANGEMENT DE TURBINE À GAZ

(30) Priority: 09.02.2016 US 201615019459
(43) Date of publication of application: 16.08.2017
(73) Proprietor: General Electric Company, Schenectady, NY 12345 (US)
(72) Inventor: HOFFMAN, Seth Reynolds, Greenville, SC 29615 (US); DICINTIO, Richard Martin, Greenville, SC 29615 (US); NATARAJAN, Jayaprakash, Greenville, SC 29650 (US); CHEN, Wei, Greenville, SC 29615 (US)
(74) Representative: BRP Renaud & Partner mbB Rechtsanwälte Patentanwälte Steuerberater

(56) References cited:
- GB-A- 2 073 400
- JP-A- 2011 226 780
- US-A- 5 285 631
- US-A1- 2005 097 890
- US-A1- 2010 275 601
- US-A1- 2013 074 471
- US-B1- 8 479 518

## Description

### BACKGROUND

The field of this disclosure relates generally to fuel injector covers and, more particularly, to a cover for a fuel injector used in a turbine assembly.

At least some known turbine assemblies include a compressor, a combustor, and a turbine. Gas flows into the compressor and is compressed prior to it being mixed with fuel in the combustor. The resulting mixture is ignited in the combustor to generate combustion gases. The combustion gases are channeled from the combustor through the turbine, thereby driving the turbine which, in turn, may power an electrical generator coupled to the turbine.

Many known combustors have an axial fuel staging (AFS) system for injecting fuel into a combustion zone. At least some known AFS systems include a primary fuel injector upstream from a secondary fuel injector such that the primary and secondary fuel injectors inject fuel into the combustion zone at different axial stages of the combustion zone. It is common for compressed gas to be mixed with fuel in the secondary fuel injector, and the mixing capability of the secondary fuel injector can influence the overall operating efficiency of the turbine assembly. In that regard, the quality of the compressed gas flow into the secondary fuel injector can affect the mixing capability of the secondary fuel injector.

GB 2 073 400 describes a fuel injector configured to swirl air and fuel together before it is injected into a fuel passage.

US 8,479,518 describes a gas turbine assembly comprising a compressor, a combustor, a primary fuel injector and a secondary fuel injection system in which a cap is provided for each secondary fuel injector.

### BRIEF DESCRIPTION

In one aspect, a gas turbine assembly according to claim 1 is provided. The gas turbine assembly comprises a secondary fuel injector cover, for attachment to an exterior of a combustor downstream of a primary fuel injector. The secondary fuel injector cover includes a top wall and a plurality of side walls projecting from the top wall and partially defining an open bottom opposite the top wall. The open bottom is sized to receive a secondary fuel injector therein. An intermediate strip segment extends across the side walls. The fuel injector cover also includes an array of flow apertures formed in the side walls, wherein the array of flow apertures is confined to the intermediate strip segment to facilitate gas flow into the cover through the flow apertures.

The gas turbine assembly includes a compressor and a combustor coupled in flow communication with the compressor. The combustor has an axial fuel staging (AFS) system that includes a secondary fuel injector, and a cover for the secondary fuel injector.

### BRIEF DESCRIPTION OF THE DRAWINGS

Figure 1 is a schematic illustration of an exemplary turbine assembly;
Figure 2 is a schematic illustration of an exemplary AFS system for use in the turbine assembly shown in Figure 1;
Figure 3 is a perspective view of an exemplary cover for a secondary fuel injector of the AFS system shown in Figure 2;
Figure 4 is a top view of the cover shown in Figure 3; and
Figure 5 is an end view of the cover shown in Figure 3.

### DETAILED DESCRIPTION

The following detailed description illustrates a fuel injector cover by way of example and not by way of limitation. The description should enable one of ordinary skill in the art to make and use the fuel injector cover, and the description describes several embodiments of the fuel injector cover. An exemplary fuel injector cover is described herein as being coupled within a turbine assembly. However, it is contemplated that the fuel injector cover described herein has general application to a broad range of systems in a variety of fields other than turbine assemblies.

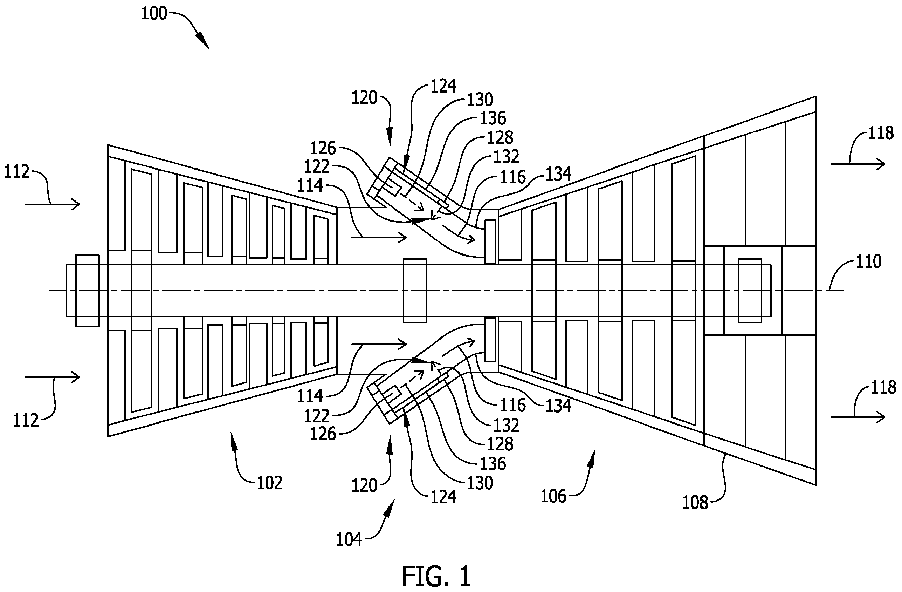

Figure 1 illustrates an exemplary turbine assembly 100. In the exemplary embodiment, turbine assembly 100 is a gas turbine assembly having a compressor 102, a combustor 104, and a turbine 106 coupled in flow communication with one another within a casing 108 and spaced along a centerline axis 110. In operation, a working gas 112 (e.g., ambient air) flows into compressor 102 and is compressed and channeled into combustor 104. Compressed gas 114 is mixed with fuel (not shown) and ignited in combustor 104 to generate combustion gases 116 that are channeled into turbine 106 and then discharged from turbine 106 as exhaust 118.

In the exemplary embodiment, combustor 104 includes a plurality of combustion cans 120, and each combustion can 120 defines a combustion zone 122 into which fuel and compressed gas 114 are injected via a fuel delivery system (e.g., an axial fuel staging (AFS) system 124). AFS system 124 includes a primary fuel injector 126 and a secondary fuel injector 128 positioned axially downstream from primary fuel injector 126. A first mixture 130 of fuel and compressed gas 114 is injected into combustion zone 122 via primary fuel injector 126, and a second mixture 132 of fuel and compressed gas 114 is injected into combustion zone 122 via secondary fuel injector 128. Secondary fuel injector 128 is mounted to a sleeve assembly 134 that defines part of its respective combustion zone 122, and secondary fuel injector 128 is supplied with fuel via a conduit 136. In other embodiments, turbine assembly 100 may have any suitable number of fuel injectors arranged in any suitable manner.

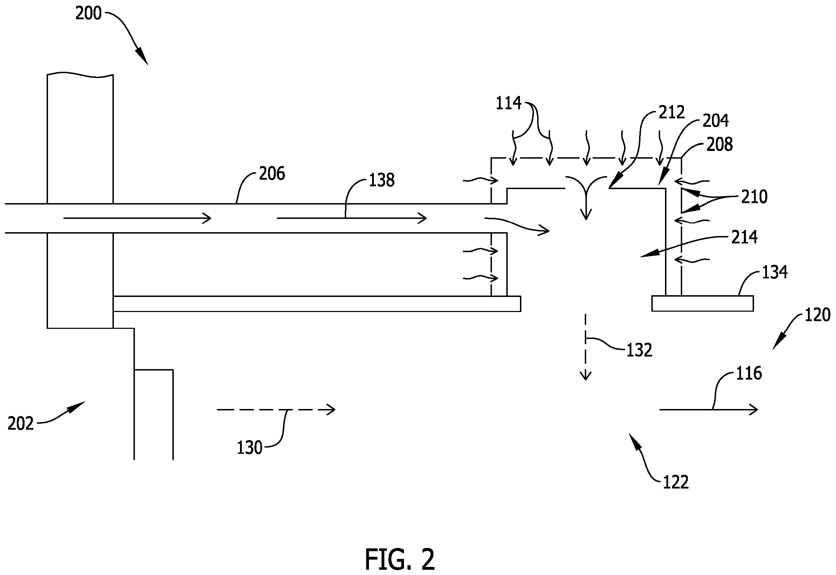

Figure 2 illustrates an exemplary AFS system 200 for use in turbine assembly 100. In the exemplary embodiment, AFS system 200 includes a primary fuel injector 202 for injecting first mixture 130 of fuel 138 and compressed gas 114 into combustion zone 122, and a secondary fuel injector 204 coupled to sleeve assembly 134 for injecting second mixture 132 of fuel 138 and compressed gas 114 into combustion zone 122 downstream of primary fuel injector 202. Secondary fuel injector 204 is coupled to a conduit 206 such that fuel 138 is supplied to secondary fuel injector 204 via conduit 206. A cover 208 is positioned over secondary fuel injector 204, and cover 208 has a plurality of flow apertures 210 that are immediately adjacent (e.g., immediately above or to the side of) a compressed gas inlet 212 of a mixing chamber 214 in secondary fuel injector 204. As such, a majority of compressed gas 114 entering cover 208 does so locally at inlet 212 to facilitate enhanced mixing of compressed gas 114 and fuel 138 within mixing chamber 214 for making second mixture 132 that is subsequently injected into combustion zone 122.

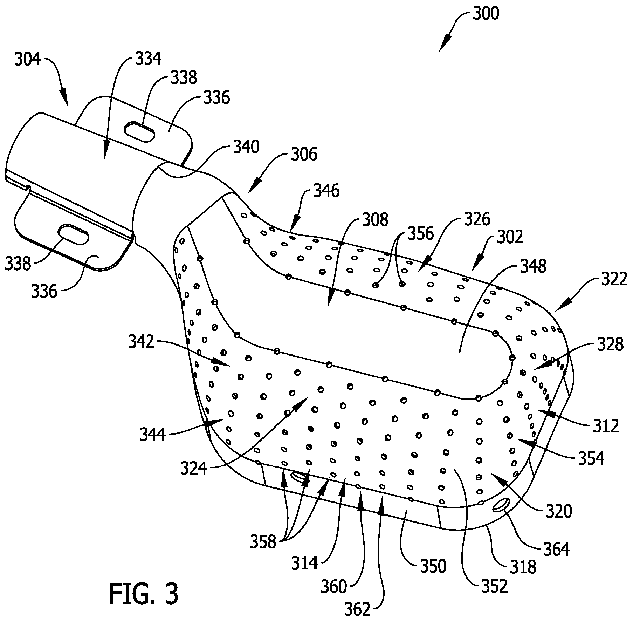

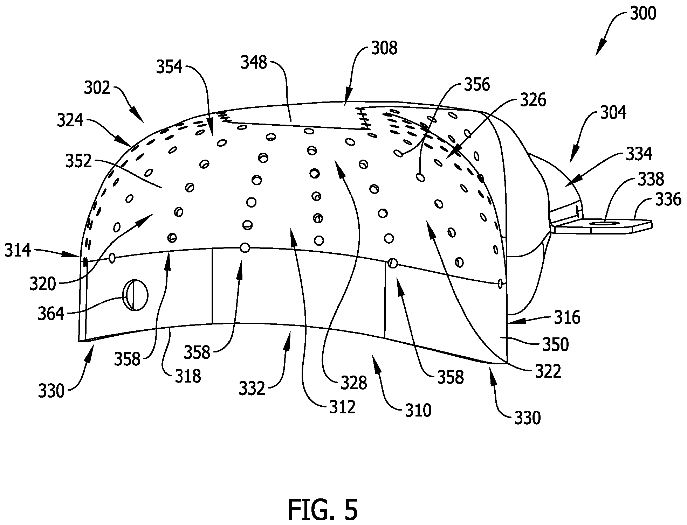

Figures 3-5 are various views of an exemplary cover 300 for use with secondary fuel injector 204 of AFS system 200. In the exemplary embodiment, cover 300 has a head section 302, a neck section 304, and a transition section 306 extending from head section 302 to neck section 304. Head section 302 and transition section 306 are sized to substantially enclose and shield secondary fuel injector 204, and neck section 304 is sized to fit over and shield part of conduit 206, particularly at the interface of conduit 206 and secondary fuel injector 204. In some embodiments, cover 300 may have a plurality of neck sections and, hence, a plurality of transition sections that are each associated with one of the respective neck sections. In other embodiments, cover 300 may not have a neck section and, hence, may not have a transition section (e.g., cover 300 may not have any structures that extend from head section 302).

In the exemplary embodiment, head section 302 has a generally semi-cuboidal shape. More specifically, head section 302 has a top wall 308 and an open bottom 310 opposite top wall 308, such that open bottom 310 is in part defined by an end wall 312, a first side wall 314, and a second side wall 316 that project from top wall 308 to collectively form a bottom edge 318. First side wall 314 and second side wall 316 oppose one another across top wall 308, and end wall 312 extends between first side wall 314 and second side wall 316. In other embodiments, head section 302 may have any suitable shape that is defined by any suitable number of walls arranged in any suitable manner.

In the exemplary embodiment, end wall 312 is joined with first side wall 314 at a first corner 320, and end wall 312 is joined with second side wall 316 at a second corner 322. Moreover, top wall 308 is joined with first side wall 314 at a third corner 324, top wall 308 is joined with second side wall 316 at a fourth corner 326, and top wall 308 is joined with end wall 312 at a fifth corner 328. Notably, top wall 308, first side wall 314, second side wall 316, and end wall 312 are substantially planar, while first corner 320, second corner 322, third corner 324, fourth corner 326, and fifth corner 328 are rounded. More specifically, in the exemplary embodiment, each corner 320, 322, 324, 326, and 328 may have a rounded curvature that is different than at least one of the other corners (e.g., each corner 320, 322, 324, 326, and 328 may have a different radius of rounding in one embodiment). In some embodiments, top wall 308, first side wall 314, second side wall 316, and end wall 312 may have any suitable curvature (i.e., top wall 308, first side wall 314, second side wall 316, and/or end wall 312 may not be substantially planar in some embodiments). In other embodiments, corners 320, 322, 324, 326, and 328 may not be rounded (e.g., corners 320, 322, 324, 326, and/or 328 may be pointed or chamfered in other embodiments).

In the exemplary embodiment, walls 312, 314, and 316 are sized differently (i.e., walls 312, 314, and 316 have different heights from bottom edge 318 to corners 328, 324, and 326, respectively). As such, bottom edge 318 has a profile that undulates arcuately, in that bottom edge 318 has arcuate peak(s) 330 and arcuate valley(s) 332. In some embodiments, bottom edge 318 may have a profile that undulates linearly (e.g., bottom edge 318 may have a plurality of peak(s) and valley(s) that are each defined at the junction of linear segments of bottom edge 318). In other embodiments, walls 312, 314, and 316 may have any suitable sizes relative to one another (e.g., walls 312, 314, and 316 may have substantially the same heights from bottom edge 318 to corners 328, 324, and 326, respectively, such that bottom edge 318 does not undulate).

In the exemplary embodiment, neck section 304 of cover has a generally semi-cylindrical body 334 and at least one flange 336 extending generally radially from body 334 to facilitate coupling cover 300 to sleeve assembly 134. More specifically, flange 336 has a hole 338 sized to receive a suitable fastener (not shown) for insertion into sleeve assembly 134. Although neck section 304 is generally semi-cylindrical in the exemplary embodiment, neck section 304 may have any suitable generally semitubular shape (e.g., neck section 304 may not have a uniform radius such that neck section 304 may not be generally semi-cylindrical in shape). Moreover, although neck section 304 is illustrated as having a pair of opposing flanges 336 in the exemplary embodiment, neck section 304 may have any suitable number of flanges 336 in some embodiments. Alternatively, in other embodiments, neck section 304 may have any suitable attachment structure that facilitates coupling cover 300 to sleeve assembly 134 in any suitable manner.

In the exemplary embodiment, transition section 306 of cover 300 is generally semitubular and funnel-shaped, in that transition section 306 has a narrower first end 340 and a wider second end 342. First end 340 is formed integrally with neck section 304, and second end 342 is formed integrally with head section 302 opposite end wall 312 such that head section 302, neck section 304, and transition section 306 are formed integrally together as a single-piece structure. Notably, transition section 306 is joined with first side wall 314 of head section 302 at a sixth corner 344 and is joined with second side wall 316 of head section 302 at a seventh corner 346. Although sixth corner 344 and seventh corner 346 are rounded in the exemplary embodiment, sixth corner 344 and seventh corner 346 may have any suitable contour in other embodiments (e.g., sixth corner 344 and/or seventh corner 346 may be pointed or chamfered in other embodiments).

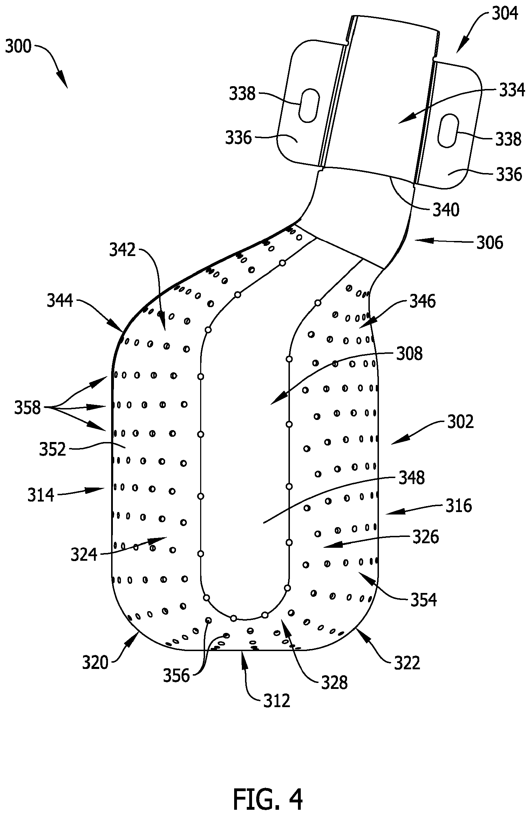

In the exemplary embodiment, neck section 304 has an oblique orientation relative to head section 302 when viewed from the perspective of Figure 4, such that transition section 306 has a bent or serpentine shape between head section 302 and neck section 304 (as shown in Figure 4). Alternatively, neck section 304 may be oriented relative to head section 302 in any suitable manner, such that transition section 306 has any suitable shape between head section 302 and neck section 304. For example, in some embodiments, neck section 304 may be oriented relative to head section 302 such that transition section 306 has a substantially linear shape when viewed from the perspective of Figure 4 (e.g., such that transition section 306 does not have a bent or serpentine shape between head section 302 and neck section 304).

In the exemplary embodiment, cover 300 has a top strip segment 348 that extends centrally across top wall 308 from near end wall 312 across at least part of transition section 306. Cover 300 also has a bottom strip segment 350 and an intermediate strip segment 352 that extend from transition section 306, across first side wall 314, across end wall 312, across second side wall 316, and back to transition section 306 such that bottom strip segment 350 is adjacent bottom edge 318 and such that intermediate strip segment 352 is between top strip segment 348 and bottom strip segment 350. In other embodiments, cover 300 may have any suitable number of strip segments arranged in any suitable manner (e.g., cover 300 may not have any strip segments in some embodiments).

Notably, cover 300 has an array 354 of flow apertures 356 that facilitate entry of compressed gas 114 into inlet 212 of secondary fuel injector 204, as set forth in more detail below. In the exemplary embodiment, array 354 is confined to intermediate strip segment 352 (i.e., flow apertures 356 are not formed on top strip segment 348 and bottom strip segment 350). More specifically, in the exemplary embodiment, array 354 extends from transition section 306, across first side wall 314, across end wall 312, across second side wall 316, and back to transition section 306 such that all of the flow apertures 356 of array 354 are located between bottom strip segment 350 and top strip segment 348. Thus, flow apertures 356 are not formed on neck section 304 in the exemplary embodiment. Moreover, in some embodiments, flow apertures 356 may be formed on only head section 302 of cover 300 (i.e., flow apertures 356 may be formed on only top wall 308, end wall 312, first side wall 314, and/or second side wall 316 of head section 302). As such, flow apertures 356 may not be formed on neck section 304 and transition section 306 in some embodiments (e.g., array 354 may be confined to head section 302 in some embodiments). Alternatively, array 354 of flow apertures 356 may be formed on, and/or confined to, any suitable section(s) of cover 300 in other embodiments.

In the exemplary embodiment, flow apertures 356 of array 354 are arranged in a pattern that includes a plurality of substantially linear rows 358 that are spaced apart from one another (e.g., are substantially equally spaced apart from one another) along intermediate strip segment 352. Each row 358 has an orientation that is substantially top-down, and flow apertures 356 are substantially equally spaced apart from one another in each row 358. In other embodiments, each row 358 may have any suitable orientation and any suitable shape (e.g., each row 358 may extend generally sideways, and/or may have an arcuate shape), and flow apertures 356 may have any suitable spacing within each row 358 (e.g., flow apertures 356 may not be substantially equally spaced apart from one another within each row 358).

In the exemplary embodiment, rows 358 include a plurality of longer rows 360 (with more flow apertures 356) and a plurality of shorter rows 362 (with less flow apertures 356) that are interspaced between longer rows 360. More specifically, each shorter row 362 is positioned between an adjacent pair of longer rows 360 in the exemplary embodiment. In other embodiments, rows 358 may have any suitable length and interspacing with one another that facilitates enabling cover 300 to function as described herein. Alternatively, flow apertures 356 of array 354 may not be arranged in a readily identifiable pattern (e.g., flow apertures 356 may be arranged in a substantially amorphous manner).

When cover 300 is assembled with secondary fuel injector 204 in combustor 104, secondary fuel injector 204 is positioned within cover 300 and is coupled to cover 300 via a plurality of fasteners (not shown) that are each inserted through a fastener aperture 364 of cover 300. Both secondary fuel injector 204 and cover 300 are then coupled to sleeve assembly 134 by inserting fasteners through holes 338 of flanges 336 and into sleeve assembly 134. During operation of turbine assembly 100, compressed gas 114 discharged from compressor 102 enters combustor 104 and flows into inlet 212 of secondary fuel injector 204 via flow apertures 356 of cover 300. Because most of the flow apertures 356 of cover 300 are formed on head section 302, the majority (e.g., seventy-five percent or more) of compressed gas 114 entering cover 300 does so locally around inlet 212 of secondary fuel injector 204 (i.e., the majority of compressed gas 114 entering cover 300 does so immediately above or around inlet 212 of secondary fuel injector 204). Additionally, the flow of compressed gas 114 discharged from compressor 102 can be non-uniform, and flow apertures 356 of cover 300 serve to condition the compressed gas 114 before it enters inlet 212 of secondary fuel injector 204 (i.e., cover 300 functions as a flow conditioner that makes the flow of compressed gas 114 into inlet 212 more uniform). Moreover, by varying the location and/or by increasing or decreasing the number and/or spacing of flow apertures 356, cover 300 can also be used to tune the effective area of inlet 212, thereby enabling secondary fuel injector 204 to be utilized over a broader range of operating cycles of turbine assembly 100.

The methods and systems described herein facilitate improving the flow of compressed gas into a fuel injector. More specifically, the methods and systems facilitate conditioning the flow of compressed gas into a fuel injector. Also, the methods and systems facilitate regulating the flow of compressed gas into a fuel injector for tuning the fuel injector for use in a broader range of operating cycles. Therefore, the methods and systems described herein facilitate enhanced mixing of fuel and compressed gas in a combustor. More specifically, the methods and systems facilitate enhanced mixing of fuel and compressed gas in a fuel injector of a combustor. For example, the methods and systems facilitate enhanced mixing of fuel and compressed gas in a secondary fuel injector of an AFS system in a turbine assembly. As such, the methods and systems facilitate improving the overall operating efficiency of a combustor such as, for example, a combustor in a turbine assembly. The methods and systems therefore facilitate increasing the output and reducing the cost associated with operating a combustor such as, for example, a combustor in a turbine assembly.

Exemplary embodiments of methods and systems are described above in detail. The methods and systems described herein are not limited to the specific embodiments described herein, but rather, components of the methods and systems may be utilized independently and separately from other components described herein. For example, the methods and systems described herein may have other applications not limited to practice with turbine assemblies, as described herein. Rather, the methods and systems described herein can be implemented and utilized in connection with various other industries.

While the invention has been described in terms of various specific embodiments, those skilled in the art will recognize that the invention can be practiced with modification within the scope of the claims.

## Claims

1. A gas turbine assembly (100) comprising:
a compressor (102); and
a combustor (104) coupled in flow communication with said compressor, wherein said combustor comprises an axial fuel staging (AFS) system (200) comprising:
a primary fuel injector (126);
a secondary fuel injector (204), positioned downstream from said primary fuel injector (126);
said secondary fuel injector (204) coupled to a sleeve assembly (134); and
a cover (300) for said secondary fuel injector, said cover positioned over secondary fuel injector (204), the cover comprising:
a top wall (308);
a plurality of side walls (314, 316) projecting from said top wall and partially defining an open bottom (310) opposite said top wall, said open bottom sized to receive a secondary fuel injector (204) therein;
an intermediate strip segment (352) that extends across said side walls (314, 316); **characterized by**
an array (354) of flow apertures (356) formed in said side walls, wherein said array (354) of flow apertures (356) is confined to said intermediate strip segment (352) to facilitate gas flow into said cover through said flow apertures.

2. The gas turbine assembly (100) of claim 1, said cover (300) further comprising a head section (302) and a neck section (304), said head section comprising said top wall (308) and said side walls (314, 316), wherein said flow apertures (356) are not formed on said neck section.

3. The gas turbine assembly (100) of claim 2, said cover (300) further comprising a transition section (306) extending from said neck section (304) to said head section (302), wherein said transition section has a first end (340) and a second end (342) that is wider than said first end.

4. The gas turbine assembly (100) of claim 3, wherein said array (354) of flow apertures (356) extends along part of said transition section (306).

5. The gas turbine assembly (100) of any preceding claim, wherein said flow apertures (356) are arranged in a plurality of rows (358).

6. The gas turbine assembly (100) in accordance with claim 5, wherein said plurality of rows (358) comprises a plurality of longer rows (360) and a plurality of shorter rows (362).

## Patentansprüche

1. Gasturbinenanordnung (100), umfassend:
einen Verdichter (102); und
eine Brennkammer (104), die in Strömungsverbindung mit dem Kompressor gekoppelt ist, wobei die Brennkammer ein axiales Brennstoffstufen-(AFS-)System (200) umfasst, das Folgendes umfasst:
eine primäre Brennstoffeinspritzvorrichtung (126);
eine sekundäre Brennstoffeinspritzvorrichtung (204), die stromabwärts von der primären Brennstoffeinspritzvorrichtung (126) positioniert ist;
wobei die sekundäre Brennstoffeinspritzvorrichtung (204) mit einer Hülsenanordnung (134) gekoppelt ist; und
eine Abdeckung (300) für die sekundäre Brennstoffeinspritzvorrichtung, wobei die Abdeckung über der sekundären Brennstoffeinspritzvorrichtung (204) angeordnet ist, wobei die Abdeckung Folgendes umfasst:
eine obere Wand (308);
eine Vielzahl von Seitenwänden (314, 316), die von der oberen Wand vorstehen und teilweise eine offene Unterseite (310) gegenüber der oberen Wand definieren, wobei die offene Unterseite so bemessen ist, dass sie eine sekundäre Brennstoffeinspritzvorrichtung (204) darin aufnehmen kann;
ein dazwischenliegendes Streifensegment (352), das sich über die Seitenwände (314, 316) erstreckt; **dadurch gekennzeichnet, dass**
eine Anordnung (354) von Strömungsöffnungen (356) in den Seitenwänden ausgebildet ist, wobei die Anordnung (354) von Strömungsöffnungen (356) auf das dazwischenliegende Streifensegment (352) beschränkt ist, um die Gasströmung in die Abdeckung durch die Strömungsöffnungen zu erleichtern.

2. Gasturbinenanordnung (100) nach Anspruch 1, wobei die Abdeckung (300) ferner einen Kopfabschnitt (302) und einen Halsabschnitt (304) umfasst, wobei der Kopfabschnitt die obere Wand (308) und die Seitenwände (314, 316) umfasst, wobei die Strömungsöffnungen (356) nicht an dem Halsabschnitt ausgebildet sind.

3. Gasturbinenanordnung (100) nach Anspruch 2, wobei die Abdeckung (300) ferner einen Übergangsabschnitt (306) umfasst, der sich von dem Halsabschnitt (304) zu dem Kopfabschnitt (302) erstreckt, wobei der Übergangsabschnitt ein erstes Ende (340) und ein zweites Ende (342) aufweist, das breiter ist als das erste Ende.

4. Gasturbinenanordnung (100) nach Anspruch 3, wobei sich die Anordnung (354) von Strömungsöffnungen (356) entlang eines Teils des Übergangsabschnitts (306) erstreckt.

5. Gasturbinenanordnung (100) nach einem der vorstehenden Ansprüche, wobei die Strömungsöffnungen (356) in einer Vielzahl von Reihen (358) angeordnet sind.

6. Gasturbinenanordnung (100) nach Anspruch 5, wobei die Vielzahl von Reihen (358) eine Vielzahl von längeren Reihen (360) und eine Vielzahl von kürzeren Reihen (362) umfasst.

## Revendications

1. Ensemble de turbine à gaz (100) comprenant :
un compresseur (102) ; et
une chambre de combustion (104) couplée en communication fluidique avec ledit compresseur, dans lequel ladite chambre de combustion comprend un système d'étagement axial de carburant (AFS)(200) comprenant :
un injecteur de carburant primaire (126) ;
un injecteur de carburant secondaire (204), positionné en aval dudit injecteur de carburant primaire (126) ;
ledit injecteur de carburant secondaire (204) couplé à un ensemble de manchon (134) ; et
un couvercle (300) pour ledit injecteur de carburant secondaire, ledit couvercle positionné
sur un injecteur de carburant secondaire (204), le couvercle comprenant :
une paroi supérieure (308) ;
une pluralité de parois latérales (314, 316) faisant saillie depuis ladite paroi supérieure et définissant partiellement un fond ouvert (310) opposé à ladite paroi supérieure, ledit fond ouvert dimensionné pour recevoir un injecteur de carburant secondaire (204) à l'intérieur de celui-ci ;
un segment de bande intermédiaire (352) qui s'étend à travers lesdites parois latérales (314, 316) ; **caractérisé par** :
un réseau (354) d'ouvertures d'écoulement (356) formées dans lesdites parois latérales, dans lequel ledit réseau (354) d'ouvertures d'écoulement (356) est confiné audit segment de bande intermédiaire (352) pour faciliter un écoulement de gaz dans ledit couvercle à travers lesdites ouvertures d'écoulement.

2. Ensemble de turbine à gaz (100) selon la revendication 1, ledit couvercle (300) comprenant en outre une section de tête (302) et une section de col (304), ladite section de tête comprenant ladite paroi supérieure (308) et lesdites parois latérales (314, 316), dans lequel lesdites ouvertures d'écoulement (356) ne sont pas formées sur ladite section de col.

3. Ensemble de turbine à gaz (100) selon la revendication 2, ledit couvercle (300) comprenant en outre une section de transition (306) s'étendant de ladite section de col (304) à ladite section de tête (302), dans lequel ladite section de transition a une première extrémité (340) et une seconde extrémité (342) qui est plus large que ladite première extrémité.

4. Ensemble de turbine à gaz (100) selon la revendication 3, dans lequel ledit réseau (354) d'ouvertures d'écoulement (356) s'étend le long d'une partie de ladite section de transition (306).

5. Ensemble de turbine à gaz (100) selon une quelconque revendication précédente, dans lequel lesdites ouvertures d'écoulement (356) sont agencées en une pluralité de rangées (358).

6. Ensemble de turbine à gaz (100) selon la revendication 5, dans lequel ladite pluralité de rangées (358) comprend une pluralité de rangées plus longues (360) et une pluralité de rangées plus courtes (362).
